(19) Europäisches Patentamt
European Patent Office
Office européen des brevets

(11) EP 1 616 841 B1

(12) EUROPEAN PATENT SPECIFICATION

(45) Date of publication and mention
of the grant of the patent:
**13.11.2013 Bulletin 2013/46**

(51) Int Cl.:
*C03C 1/00* (2006.01)　　*C04B 35/624* (2006.01)

(21) Application number: **04022465.1**

(22) Date of filing: **21.09.2004**

(54) **Functionalized sol-gel material, sol-gel film derived therefrom, and method for preparing the same**

Funktionalisiertes Sol-Gel Material, daraus hergestellte Sol-Gel Schicht und Verfahren zu dessen Herstellung

Matériau sol-gel fonctionnalisé, couche sol-gel dérivée de ce matériau et méthode de production

(84) Designated Contracting States:
**AT BE BG CH CY CZ DE DK EE ES FI FR GB GR HU IE IT LI LU MC NL PL PT RO SE SI SK TR**

(30) Priority: **12.07.2004 US 889306**

(43) Date of publication of application:
**18.01.2006 Bulletin 2006/03**

(73) Proprietor: **INDUSTRIAL TECHNOLOGY RESEARCH INSTITUTE
Chutung Town,
Hsinchu Hsien (TW)**

(72) Inventors:
• **Jang, Guan-Way
Hsinchu City 300
Taiwan (CN)**
• **Lin, Ya-Hui
Hsinchu City
Taiwan (CN)**
• **Tsai, I-Chia
Pingtung City
Pingtung Hsien
Taiwan (CN)**
• **Tien, Pei
Kaohsiung City
Taiwan (CN)**
• **Sheen, Yuung-Ching
Chu Pei City
Hsinchu Hsien
Taiwan (CN)**

(74) Representative: **Viering, Jentschura & Partner
Kennedydamm 55 / Roßstrasse
40476 Düsseldorf (DE)**

(56) References cited:
CA-A1- 2 339 053　　DE-C1- 4 416 857
US-A- 4 754 012　　US-A- 4 799 963
US-A1- 2002 123 592

## Description

### Field of the Invention

The present invention relates to a sol-gel material, and more particularly, to a functionalized sol-gel material, a method of preparing the same, and a sol-gel film derived therefrom.

### Background of the Invention

Organic-inorganic hybrid materials possess not only the advantages of organic materials, such as processibility and flexibility, but also the advantages of inorganic materials, like high mechanical strength and high thermal properties, and hence are studied internationally and are widely applied in various fields. In general, a hybrid material is prepared by mixing an organic material and an inorganic material, which are associated by molecular forces therebetween, such as, for example, London-van der Waals force or hydrogen bonding, on a nanometer scale. Therefore, the hybrid material is formed without phase separation in the macroscopic view, and further combines the properties of the organic material and the inorganic material.

Due to the poor thermal properties of organic materials, organic-inorganic hybrid materials cannot be prepared in a conventional ceramic-manufacturing process. Instead, a sol-gel process is usually adopted to fabricate organic-inorganic hybrid  materials. Sol-gel process including a hydrolysis step and a condensation step performed at a low temperature. Consequently, organic materials can be introduced into inorganic materials without degradation.

The organic-inorganic hybrid materials prepared by the sol-gel process, however, are easily influenced by surrounding conditions, such as, for instance, temperature or humidity. As a result, the organic-inorganic sol-gel materials tend to age, which decreases the shelf life thereof. Additionally, the organic-inorganic sol-gel materials with a nanometer dimension incline to aggregate with one another. To stabilize the properties and the sizes of the organic-inorganic sol-gel materials, chelating agents are required in preparing the same. The chelating agents are, for example, methacrylic acid, acetic acid, and acetyl acetone.

On the other hand, the solid content of the organic-inorganic sol-gel materials prepared by the sol-gel process is usually around 20% to 30%, of which the viscosity is not high enough for preparing a thick sol-gel film. Unfortunately, raising the solid content by increasing reaction time and reactant concentrations directly results in gelation of the organic-inorganic sol-gel materials. Moreover, phase separation occurs if the viscosity of the organic-inorganic sol-gel materials is increased by adding another polymer solution with higher viscosity.

CA2339053 discloses a method for preparing a functionalised sol-gel material, comprising the steps of:

- dissolving TEOS in ethanol

- dissolving methacryloxypropyl tri-methoxysilane in water with HCl

- mixing the first solution and the second solution to form a mixture

- stir at room temperature to form the sol-gel material;

- adding water into the solution and applying on a substrate to form a layer.

### Summary of the Invention

It is the objective of the present invention to provide a method of preparing a functionalized sol-gel material without using chelating agents. The functionalized sol-gel material is stable on a nanometer scale, through which a thick sol-gel film is  further fabricated.

According to the aforementioned objective of the present invention, on the one hand, a functionalized organic-inorganic sol-gel material according to claim 14 and a preparation method thereof according to claim 1 are provided. An organic material and an inorganic material are separately mixed with corresponding solvents, followed by mixing the solvents and heating the same for a period of time to form a sol-gel material. The inorganic material is a metal alkoxide of which the un-saturation degree of the metal atom therein is greater than zero, while the organic material is an organically modified Si-alkoxide. The interaction between the sol-gel materials is effectively reduced, which prevents the sol-gel materials from aggregating with one another, by selecting proper solvents at the beginning of preparation. Therefore, the functionalized organic-inorganic sol-gel material with a stable nanometer dimension is formed by means of the selected solvents instead of any chelating agents.

According to the aforementioned objective of the present invention, on the other hand, a method for preparing a thick sol-gel film derived from a functionalized sol-gel material according to claim 1 is provided. The solid content of a functionalized sol-gel material is dramatically raised by transferring the sol-gel material into a selected solvent. A thick and uniform film is then formed more easily, since the solid content of the sol-gel material has been increased. Hence, the sol-gel material after being transferred can be used to fabricate directly a thick film with no need of other adhesives, like polymer solution with higher viscosity.

**Brief Description of the Drawings**

The foregoing aspects, as well as many of the attendant advantages and features of this invention will become more apparent by reference to the following detailed description, when taken in conjunction with the accompanying drawings, wherein:

FIG. 1 illustrates a flowchart of preparing a functionalized sol-gel material in accordance with a preferred embodiment of the present invention;
FIG. 2 illustrates an infrared spectrum of the functionalized sol-gel material prepared according to FIG. 1;
FIG. 3 shows a TEM picture of the functionalized sol-gel material prepared according to FIG. 1; and
FIG. 4 illustrates a flowchart of preparing a thick sol-gel film in accordance with another preferred embodiment of the present invention.

**Detailed Description of the Preferred Embodiments**

It is found that an organic-inorganic sol-gel material with a stable dimension on a nanometer scale is prepared with no need of chelating agents, if the stability of a reactive solution is properly controlled according to the following equations at the beginning of preparation.

$$V_{att} = -\frac{A_{13}}{12}H(x, y) \qquad (1)$$

$$A_{13} = \frac{3}{4}kT\left[\frac{\varepsilon 1 - \varepsilon 3}{\varepsilon 1 + \varepsilon 3}\right]^2 + \frac{3h\nu_e}{16\sqrt{2}} \cdot \frac{(n_1^2 - n_3^2)^2}{(n_1^2 + n_3^2)^{3/2}} \qquad (2)$$

Equation (1) represents the attraction energy ($V_{att}$) between two spherical particles (medium 1) dispersed in a medium 3, where $A_{13}$ is the Hamaker constant and $H(x, y)$ is the Hamaker function, which depends on the inter-particle distance and on the particle radius. An approximate expression for $A_{13}$ is given by equation (2), where $\varepsilon 1$ and $\varepsilon 3$ are the dielectric constants of the media, $n_1$ and $n_3$ are their refractive indexes in the visible range, $\nu_e$ is the absorption frequency of the media assumed to be the same for both of them, k is the Boltzmann constant ($1.38 \times 10^{-23}$ J·K$^{-1}$), T is the absolute temperature, and h is the Planck's constant ($6.626 \times 10^{-34}$ J·s).
According to these equations, the interaction between particles is dependent on the properties of a medium where the particles are dispersed. Consequently, the attraction energy between particles is reduced if an adequate medium is selected; the particles are thus less attracted to one another and aggregate less. Therefore, particles with stable dimensions are obtained without using any chelating agents. By this principle, a functionalized sol-gel material, a method for preparing the same, and a thick sol-gel film derived therefrom in accordance with the preferred embodiments of the present invention are disclosed in detail as follows, taken in conjunction with the accompanying drawings.

Embodiment 1

One aspect of the present invention is to provide a metal alkoxide and an organically modified Si-alkoxide having a predetermined functional group as precursors to form a functionalized sol-gel material. Additionally, solvents are selected according to the principle mentioned above before preparing the material. As a result, stable reactive surroundings for the material are provided at the beginning of preparation.
The metal alkoxide can be formulated as $M(OR)_x$, where M is a metal atom, x is the valence of M, and R represents $C_1$-$C_{12}$ alkyl. Further, the un-saturation degree of the metal atom i.e. the difference between the coordination number and the valence of M, is greater than zero. The metal atom is, for example, titanium (Ti), zirconium (Zr), germanium (Ge), tin (Sn), or cerium (Ce). The aforesaid metal alkoxide may be zirconium butoxide ($Zr(OBu)_4$) or zirconium propoxid

(Zr(OPr)$_4$), and is preferably zirconium butoxide in the embodiment. Furthermore, the organically modified Si-alkoxide can be expressed as R$^1$Si(OR)$_3$ or R$^1$R$^2$Si(OR)$_2$, where R represents C$_1$-C$_{12}$ alkyl, and R$^1$ and R$^2$ are hydrocarbyl groups that may be different or the same. The predetermined functional group (R$^1$ or R$^2$) may be an epoxy group or an amine group (-NH), or an unsaturated functional group, such as a vinyl group, an acryl group, or a photosensitive derivative thereof. Moreover, methacryloxypropyl tri-methoxysilane (MPTMS) is preferably used in the embodiment.

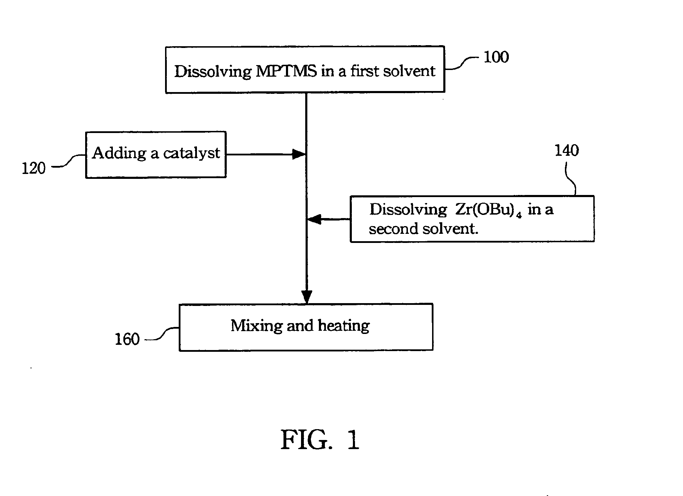

Reference is made to FIG. 1, which illustrates a flowchart of the process of preparing a functionalized sol-gel material in accordance with the embodiment. According to step 100, MPTMS of 15g (about 0.06 mole) is dissolved in a first solvent of 30g to form a first solution, which is then stirred 30 to 60 minutes. A catalyst is further added to the first solution for aiding the hydrolysis of the MPTMS, in step 120. In the preferred embodiment, the catalyst is 0.1N hydrochloride solution (HCl). In step 140, a second solution is formed by dissolving zirconium butoxide in a second solvent and stirring the second solution for around 10 to 30 minutes. The first solution and the second solution are next mixed and heated for a period of time in step 160. Generally, the temperature to which the solutions are heated is slightly lower than the boiling points of the solvents and the dielectric constant of the first and second solvent are smaller than 10. Moreover, the first solvent may be the same as the second solvent, and the dielectric constants of the first and second solvent are smaller than 10 and hence the reaction is controlled more easily. In the preferred embodiment of the present invention, the first solvent and the second solvent are both tetra- hydrofuran (THF), and the heating temperature is around 65°C.

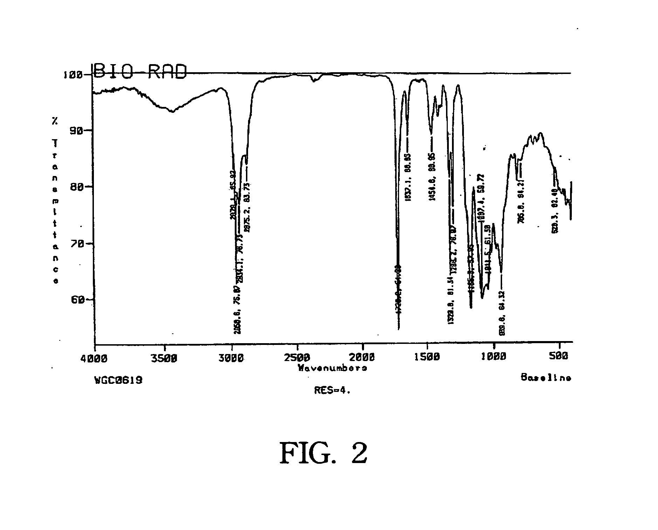

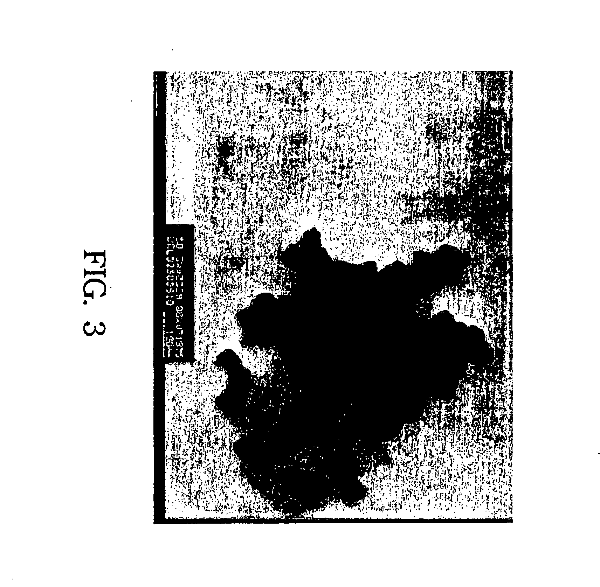

The resultant material is a transparent solution, which also implies that the resultant particles are on a nanometer (nm) scale and are well dispersed in the solvents. The Fourier Transformation infrared (FTIR) spectrum of the particles is shown in FIG. 2. The absorption band at around 1600 cm$^{-1}$ and around 1730 cm$^{-1}$ are due to the C=C stretching mode and the C=O stretching mode of MPTMS, respectively. The absorption band at about 840 cm$^{-1}$ is assigned to Zr-O-Si bonding. On this ground, a sol-gel material/particle having a photosensitive group is prepared. FIG. 3 is the transmission electron microscopy (TEM) picture of the particles, which further proves that the size of the resultant particles is smaller than 100 nm, and that the particle size distribution is uniform.

Further, the attraction energy (A$_{13}$) of THF as calculated by the aforementioned equation (2) is 11.1 or so. As a result, the interaction between the particles is decreased by THF, which prevents the particles from attracting one another and aggregating. Therefore, a sol-gel particle with stable dimensions is prepared through adequate solvents. Moreover, THF is only an exemplary solvent, and is not intended to limit the invention. Other solvents that provide stable reactive surroundings, for instance, toluene (A$_{13}$ is about 12.1) or propylene glycol monoether acetate (PMAc) (A$_{13}$ is about 9.6), are also used to prepare an organic-inorganic sol-gel material with stable dimensions.

On the other hand, the aforenamed precursors and the proportions thereof are merely in favor of illustrating the embodiment. It is appreciated that any substitutes, although not described or shown herein, which embody the principles of the invention, are included within the scope of the invention. For instance, a sol-gel material having an epoxy group on a nanometer scale is formed through 3-glycidoxypropyl trimethoxysilane (GLYMO), in the case where solvents are appropriately selected at the beginning of preparation.

Embodiment 2 (Comparative Example)

In this embodiment, an organic-inorganic sol-gel material is formed in alcohol under the same preliminary conditions as those in embodiment 1. The material in alcohol is further compared with materials formed in different solvents, which results are listed in Table 1.

Table 1 Comparative results of various materials formed in different solvents

| Solvent | Dielectric constant of solvent | Attraction energy (A$_{13}$) | Particle size (nm) | Solution condition |
|---------|-------------------------------|------------------------------|--------------------|--------------------|
| THF | 7.6 | 11.1 | < 100 | Transparent |
| Toluene | 2.2 | 12.1 | < 100 | Transparent |
| PMAc | 6.7 | 9.6 | < 100 | Transparent |
| Alcohol | 25.7 | 1.1 | >5000 | Opaque |

It is found from Table 1 that, a transparent solution and nano-particles are obtained if an adequate solvent is selected. Consequently, particles attract one another and aggregate less, and thus have stable sizes, because solvents decrease the interaction between particles. On the contrary, larger particles are given in alcohol, and the resultant solution is opaque. Furthermore, the dielectric constant of solvents is smaller than 10.

Embodiment 3

For preparing a thick sol-gel film, the solid content of a sol-gel material is increased by transferring the same into another solvent in accordance with the present invention. The sol-gel material of Embodiment 1 herein is only an example to describe the process for convenience, which is not proposed to limit the invention.

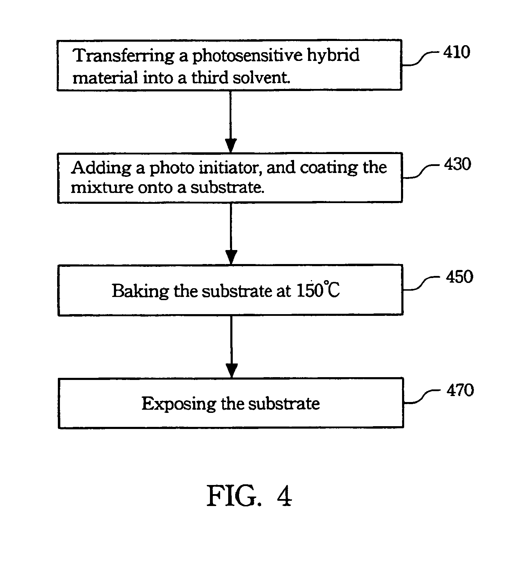

Reference is made to FIG. 4, which illustrates a flowchart of preparing a thick sol-gel film according to the embodiment. The photosensitive sol-gel material of Embodiment 1 is first transferred into a third solvent, in step 410. The boiling point of the third solvent is smaller than those of the first solvent and the second solvent. Additionally, the amount of the third solvent is less than the total amount of the first solvent and the second solvent. As a result, the first solvent and the second solvent are removed by heating, and the sol-gel material remains in the third solvent. Therefore, the solid content of the sol-gel material is increased. The third solvent is determined by its compatibility with an applied substrate, and is preferably propylene glycol monoether acetate in this embodiment. Then, in step 430, a photo initiator is mixed in the transferred third solvent, and the mixture is coated onto a substrate thereafter. The substrate is next baked at around 150°C in step 450, and is exposed in step 470. Hence, the photosensitive sol-gel material on the substrate is further cross-linked thoroughly, and a thick sol-gel film is thus derived. The thickness of the sol-gel film is up to 10$\mu$m and above, when the solid content of the sol-gel material is raised to about 50%.

A thick and uniform sol-gel film is derived directly from a transferred sol-gel material in accordance with the embodiment. Consequently, no binder is required, and no phase separation occurs. Additionally, the thickness of a sol-gel film can be controlled by adjusting the solid content of a sol-gel material. Further, the transmission of the sol-gel film coated on a glass is above 90% in the visible range of 400nm to 700nm and at wavelengths of 1310nm and 1550nm. The baking temperature or species of the initiator and the third solvent are exemplary descriptions only, and are not proposed to limit the invention.

According to the aforementioned preferred embodiments of the present invention, a functionalized organic-inorganic sol-gel material is prepared without any chelating agents in selected solvents. The resultant sol-gel particles are on a nanometer scale, and are stably dispersed in the selected solvents. On the other hand, a thick sol-gel film is fabricated by means of the sol-gel material of which solid content is effectively increased by transferring the same into another solvent.

**Claims**

1.  A method for preparing a functionalized sol-gel material, comprising the steps of:

    dissolving a metal alkoxide in a first solvent to form a first solution free of a chelating agent, wherein the metal alkoxide is formulated as M(OR)x, wherein M represents a metal atom and the difference between the coordination number and the valence of M is greater than zero, x is a valence of M, and R is a C1-C12 alkyl;
    dissolving an organically modified Si-alkoxide and a catalyst in a second solvent to form a second solution, wherein the first solvent and the second solvent are identical, and the dielectric constants of the first solvent and the second solvent are smaller than 10;
    mixing the first solution and the second solution to form a mixture; and
    heating the mixture to react the metal alkoxide with the organically modified Si-alkoxide to form a functionalized sol-gel material, wherein the first solvent and the second solvent further stabilize the functionalized sol-gel material, and hence prevent the functionalized sol-gel material from aggregating with one another.

2.  The method of claim 1, wherein the metal atom (M) is selected from a group consisting of titanium (Ti), zirconium (Zr), germanium (Ge), tin (Sn), and cerium (Ce).

3.  The method of claim 2, wherein the metal alkoxide comprises zirconium butoxide or zirconium propoxide.

4.  The method of claim 1, wherein the organically modified Si-alkoxide further comprises an unsaturated functional group.

5.  The method of claim 4, wherein the unsaturated functional group comprises a vinyl group, or an acryl group.

6.  The method of claim 5, wherein the organically modified Si-alkoxide is methacryloxypropyl tri-methoxysilane.

7.  The method of claim 1, wherein the organically modified Si-alkoxide further comprises an epoxy group or an amine group.

8. The method of claim 7, wherein the organically modified Si-alkoxide is 3-glycidoxypropyl tri-methoxysilane.

9. The method of claim 1, wherein the first solvent and the second solvent comprise tetrahydrofuran, toluene, or propylene glycol monoether acetate.

10. The method of claim 1, wherein the method is for the preparation of a thick sol-gel film and further comprises transferring the functionalized sol-gel material into a third solvent, wherein a boiling point of the third solvent is higher than boiling points of the first solvent and the second solvent.

11. The method of claim 10, further comprising the steps of:

adding an initiator to the third solvent to form another mixture;
coating the mixture with the initiator onto a substrate; and
baking the substrate.

12. The method of claim 10, wherein the first solvent and the second solvent comprise tetrahydrofuran or toluene.

13. The method of claim 10, wherein the third solvent comprises propylene glycol monoether acetate.

14. An organic-inorganic sol-gel material, the material comprising:

at least a functionalized nano-particle having at least a predetermined functional group, wherein the functionalized nano-particle is composed of a metal alkoxide and an organically modified Si-alkoxide, but excludes a chelating agent, wherein the metal alkoxide is formulated as $M(OR)_x$, and the organically modified Si-alkoxide has the predetermined functional group, wherein M represents a metal atom and the difference between the coordination number and the valence of M is greater than zero, x is a valence of M, and R is a $C_1$-$C_{12}$ alkyl, and wherein the predetermined functional group is an unsaturated functional group, an epoxy group or an amine group; and
a solvent for dispersing the functionalized, nano-particle, wherein the dielectric constant of the solvent is less than 10.

15. The material of claim 14, wherein the solvent comprises tetrahydrofuran, toluene, or propylene glycol monoether acetate.

16. The material of claim 14, wherein the metal atom (M) is selected from a group consisting of titanium (Ti), zirconium (Zr), germanium (Ge), tin (Sn), and cerium (Ce).

17. The material of claim 16, wherein the metal alkoxide comprises zirconium butoxide or zirconium propoxide.

18. The material of claim 14, wherein the unsaturated functional group comprises a vinyl group, or an acryl group.

19. The material of claim 18, wherein the organically modified Si-alkoxide is methacryloxypropyl tri-methoxysilane.

20. The material of claim 14, wherein the organically modified Si-alkoxide is 3-glycidoxypropyl tri-methoxysilane.

**Patentansprüche**

1. Ein Verfahren zur Herstellung eines funktionalisierten Sol-Gel-Materials, umfassend die Schritte:

Lösen eines Metallalkoxids in einem ersten Lösungsmittel, um eine erste Lösung frei von chelatisierenden Agenzien herzustellen, wobei das Metallalkoxid als $M(OR)_x$ formuliert ist, wobei M ein Metallatom darstellt und die Differenz zwischen der Koordinationszahl und der Valenz von M größer Null ist, x die Valenz von M ist und R ein C1-C12 Alkyl ist;
Lösen eines organisch modifizierten Siliziumalkoxids und eines Katalysators in einem zweiten Lösungsmittel, um eine zweite Lösung herzustellen, wobei das erste Lösungsmittel und das zweite Lösungsmittel identisch sind und die dielektrischen Konstanten des ersten Lösungsmittels und des zweiten Lösungsmittels kleiner 10 sind;

Vermischen der ersten Lösung und der zweiten Lösung, um ein Gemisch zu herzustellen; und
Erhitzen des Gemischs, um das Metallalkoxid mit dem organisch modifizierten Siliziumalkoxid zur Reaktion zu bringen, um ein funktionalisiertes Sol-Gel-Material auszubilden, wobei das erste Lösungsmittel und das zweite Lösungsmittel ferner das funktionalisierte Sol-Gel-Material stabilisieren und somit eine Aggregation des funktionalisierten Sol-Gel-Materials mit sich selbst verhindert wird.

2. Das Verfahren nach Anspruch 1, wobei das Metallatom (M) ausgewählt wird aus der Gruppe bestehend aus Titan (Ti), Zirkonium (Zr), Germanium (Ge), Zinn (Sn) und Cer (Ce).

3. Das Verfahren nach Anspruch 2, wobei das Metallalkoxid Zirkoniumbutoxid oder Zirkoniumpropoxid umfasst.

4. Das Verfahren nach Anspruch 1, wobei das organisch modifizierte Siliziumalkoxid ferner eine ungesättigte funktionelle Gruppe umfasst.

5. Das Verfahren nach Anspruch 4, wobei die ungesättigte funktionelle Gruppe eine Vinylgruppe oder eine Acrylgruppe umfasst.

6. Das Verfahren nach Anspruch 5, wobei das organisch modifizierte Siliziumalkoxid Methacryloxypropyl-tri-methoxysilan ist.

7. Das Verfahren nach Anspruch 1, wobei das organisch modifizierte Siliziumalkoxid ferner eine Epoxygruppe oder Amingruppe umfasst.

8. Das Verfahren nach Anspruch 7, wobei das organisch modifizierte Siliziumalkoxid 3-Glycidoxypropyl-tri-methoxysilan ist.

9. Das Verfahren nach Anspruch 1, wobei das erste Lösungsmittel und das zweite Lösungsmittel Tetrahydrofuran, Toluol oder Propylenglykol-Monoetheracetat umfassen.

10. Das Verfahren nach Anspruch 1, wobei das Verfahren zur Herstellung eines zähflüssigen Sol-Gel-Films verwendet wird und ferner umfasst:

Transferieren des funktionalisierten Sol-Gel-Materials in ein drittes Lösungsmittel, wobei der Siedepunkt des dritten Lösungsmittels höher ist als die Siedepunkte des ersten Lösungsmittels und des zweiten Lösungsmittels.

11. Das Verfahren nach Anspruch 10, ferner umfassend die Schritte:

Zugabe eines Initiators zu der dritten Lösung, um ein weiteres Gemisch herzustellen;
Beschichten eines Substrats mit dem Gemisch mit dem Initiator; und
Backen des Substrats.

12. Das Verfahren nach Anspruch 10, wobei das erste Lösungsmittel und das zweite Lösungsmittel Tetrahydrofuran oder Toluol umfassen.

13. Das Verfahren nach Anspruch 10, wobei das dritte Lösungsmittel Propylenglykol-Monoetheracetat umfasst.

14. Ein organisch-anorganisches Sol-Gel-Material, wobei das Material umfasst:

mindestens ein funktionalisiertes Nanopartikel mit mindestens einer zuvor bestimmten funktionellen Gruppe, wobei das funktionalisierte Nanopartikel aus einem Metallalkoxid und einem organisch modifizierten Siliziumalkoxid besteht, jedoch kein chelatisierendes Agens beinhaltet, wobei das Metallalkoxid als $M(OR)_x$ formuliert ist und das organisch modifizierte Siliziumalkoxid die zuvor bestimmte funktionellen Gruppe aufweist, wobei M ein Metallatom darstellt und die Differenz zwischen der Koordinationszahl und der Valenz von M größer Null ist, x die Valenz von M ist und R ein C1-C12 Alkyl ist, und wobei die zuvor bestimmte funktionelle Gruppe eine ungesättigte funktionelle Gruppe, eine Epoxygruppe oder eine Amingruppe ist; und
ein Lösungsmittel zum Dispergieren des funktionalisierten Nanopartikels, wobei die dielektrische Konstante des Lösungsmittels kleiner 10 ist.

**15.** Das Material nach Anspruch 14, wobei das Lösungsmittel Tetrahydrofuran, Toluol oder Propylenglykol-Monoetheracetat umfasst.

**16.** Das Material nach Anspruch 14, wobei das Metallatom (M) ausgewählt wird aus der Gruppe bestehend aus Titan (Ti), Zirkonium (Zr), Germanium (Ge), Zinn (Sn) und Cer (Ce).

**17.** Das Material nach Anspruch 16, wobei das Metallalkoxid Zirkoniumbutoxid oder Zirkoniumpropoxid umfasst.

**18.** Das Material nach Anspruch 14, wobei die ungesättigte funktionelle Gruppe eine Vinylgruppe oder eine Acrylgruppe umfasst.

**19.** Das Material nach Anspruch 18, wobei das organisch modifizierte Siliziumalkoxid Methacryloxypropyl-tri-methoxysilan ist.

**20.** Das Material nach Anspruch 14, wobei das organisch modifizierte Siliziumalkoxid 3-Glycidoxypropyl-tri-methoxysilan ist.

## Revendications

**1.** Procédé de préparation d'un matériau sol-gel fonctionnalisé, comprenant les étapes consistant à :

dissoudre un alcoxyde métallique dans un premier solvant pour former une première solution exempte d'agent chélateur, l'alcoxyde métallique présente la formule $M(OR)_x$ dans laquelle M représente un atome métallique et la différence entre le nombre de coordination et la valence de M est supérieure à zéro, x est une valence de M, et R est un alkyle en $C_1$ à $C_{12}$ ;
dissoudre un alcoxyde de Si à modification organique et un catalyseur dans un deuxième solvant pour former une deuxième solution, dans lequel le premier solvant et le deuxième solvant sont identiques, et les constantes diélectriques du premier solvant et du deuxième solvant sont inférieures à 10 ;
mélanger la première solution et la deuxième solution pour former un mélange ; et
chauffer le mélange pour faire réagir l'alcoxyde métallique avec l'alcoxyde de Si à modification organique pour former un matériau sol-gel fonctionnalisé,
dans lequel le premier solvant et le deuxième solvant stabilisent en outre le matériau sol-gel fonctionnalisé, et ainsi empêchent le matériau sol-gel fonctionnalisé de s'agréger entre eux.

**2.** Procédé selon la revendication 1, dans lequel l'atome métallique (M) est choisi parmi le groupe comprenant le titane (Ti), le zirconium (Zr), le germanium (Ge), l'étain (Sn) et le cérium (Ce).

**3.** Procédé selon la revendication 2, dans lequel l'alcoxyde métallique comprend le butoxyde de zirconium ou le propoxyde de zirconium.

**4.** Procédé selon la revendication 1, dans lequel l'alcoxyde de Si à modification organique comprend en outre un groupe fonctionnel insaturé.

**5.** Procédé selon la revendication 4, dans lequel le groupe fonctionnel insaturé comprend un groupe vinyle ou un groupe acryle.

**6.** Procédé selon la revendication 5, dans lequel l'alcoxyde de Si à modification organique est le méthacryloxypropyltriméthoxysilane.

**7.** Procédé selon la revendication 1, dans lequel l'alcoxyde de Si à modification organique comprend en outre un groupe époxy ou un groupe amine.

**8.** Procédé selon la revendication 7, dans lequel l'alcoxyde de Si à modification organique est le 3-glycidoxypropyltriméthoxysilane.

**9.** Procédé selon la revendication 1, dans lequel le premier solvant et le deuxième solvant comprennent le tétrahydrofurane, le toluène, ou l'acétate de monoéther de propylène glycol.

**10.** Procédé selon la revendication 1, dans lequel le procédé est destiné à la préparation d'un film sol-gel épais et comprend en outre

le transfert du matériau sol-gel fonctionnalisé dans un troisième solvant,

dans lequel le point d'ébullition du troisième solvant est supérieur aux points d'ébullition du premier solvant et du deuxième solvant.

**11.** Procédé selon la revendication 10, comprenant en outre les étapes consistant à :

ajouter un amorceur au troisième solvant pour former un autre mélange ;

déposer sous forme de revêtement le mélange avec l'amorceur sur un substrat ;

et

cuire le substrat.

**12.** Procédé selon la revendication 10, dans lequel le premier solvant et le deuxième solvant comprennent du tétrahydrofurane ou du toluène.

**13.** Procédé selon la revendication 10, dans lequel le troisième solvant comprend de l'acétate de monoéther de propylène glycol.

**14.** Matériau sol-gel organique-inorganique, le matériau comprenant :

au moins une nanoparticule fonctionnalisée présentant au moins un groupe fonctionnel prédéterminé, dans lequel la nanoparticule fonctionnalisée est composée d'un alcoxyde métallique et d'un alcoxyde de Si à modification organique, mais exclut un agent chélateur, dans lequel l'alcoxyde métallique présente la formule M $(OR)_x$, et l'alcoxyde de Si à modification organique présente le groupe fonctionnel prédéterminé, dans lequel M représente un atome métallique et la différence entre le nombre de coordination et la valence de M est supérieure à zéro, x est la valence de M, et R est un alkyle en $C_1$ à $C_{12}$, et dans lequel le groupe fonctionnel prédéterminé est un groupe fonctionnel insaturé, un groupe époxy ou un groupe amine ; et

un solvant pour disperser la nanoparticule fonctionnalisée, dans lequel la constante diélectrique du solvant est inférieure à 10.

**15.** Matériau selon la revendication 14, dans lequel le solvant comprend le tétrahydrofurane, le toluène, ou l'acétate de monoéther de propylène glycol.

**16.** Matériau selon la revendication 14, dans lequel l'atome métallique (M) est choisi parmi le groupe comprenant le titane (Ti), le zirconium (Zr), le germanium (Ge), l'étain (Sn), et le cérium (Ce).

**17.** Matériau selon la revendication 16, dans lequel l'alcoxyde métallique comprend le butoxyde de zirconium ou le propoxyde de zirconium.

**18.** Matériau selon la revendication 14, dans lequel le groupe fonctionnel insaturé comprend un groupe vinyle ou un groupe acryle.

**19.** Matériau selon la revendication 18, dans lequel l'alcoxyde de Si à modification organique est le méthacryloxypropyltriméthoxysilane.

**20.** Matériau selon la revendication 14, dans lequel l'alcoxyde de Si à modification organique est le 3-glycidoxypropyl-triméthoxysilane.

FIG. 1

FIG. 2

FIG. 3

Transferring a photosensitive hybrid material into a third solvent. — 410

Adding a photo initiator, and coating the mixture onto a substrate. — 430

Baking the substrate at 150°C — 450

Exposing the substrate — 470

# FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CA 2339053